# EUROPÄISCHE PATENTSCHRIFT

(11) **EP 0 746 775 B1**
(45) Veröffentlichungstag und Bekanntmachung des Hinweises auf die Patenterteilung: **22.07.1998**
(21) Anmeldenummer: 95908194.4
(22) Anmeldetag: 14.02.1995
(51) Int. Cl.: G01S 13/02, G06K 7/10

(54) **MIT AKUSTISCHEN OBERFLÄCHENWELLEN ARBEITENDE IDENTIFIZIERUNGSMARKE**
IDENTIFICATION TAG OPERATING WITH ACOUSTIC SURFACE WAVES
ETIQUETTE D'IDENTIFICATION FONCTIONNANT AVEC DES ONDES ACOUSTIQUES DE SURFACE

(30) Priorität: 22.02.1994 DE 4405647
(43) Veröffentlichungstag der Anmeldung: 11.12.1996
(73) Patentinhaber: SIEMENS AKTIENGESELLSCHAFT, 80333 München (DE)
(72) Erfinder: SCHMIDT, Frank, D-81667 München (DE); MAGORI, Valentin, D-81539 München (DE); REINDL, Leonhard, D-83071 Stephanskirchen (DE); OSTERTAG, Thomas, D-89075 Ulm (DE)
(86) Internationale Anmeldenummer: DE9500180
(87) Internationale Veröffentlichungsnummer: WO9522770

(56) Entgegenhaltungen:
- WO-A-93/13495

## Beschreibung

Die vorliegende Erfindung betrifft eine mit akustischen Oberflächenwellen arbeitende Identifizierungsmarke - ID-Tag - für Identifizierungssysteme nach dem Oberbegriff des Patentanspruchs 1, die aus der WO-A-93/13495 bekannt ist.

Identifizierungsmarken - im folgenden kurz ID-Tag genannt - der gattungsgemaßen Art werden in Identifizierungssystemen zur berührungslosen automatischen Identifikation von Objekten verwendet und sind beispielsweise aus "Siemens Zeitschrift" Spezial FuE, Frühjahr 1993 bekannt. Derartige ID-Tags sind Bauelemente, in denen ein elektrisches Signal mittels eines Wandlers in eine akustische Oberflächenwelle umgesetzt wird, welche an einer Folge von Reflektoren reflektiert wird, wobei die reflektierte akustische Oberflächenwelle durch einen Wandler, welcher gleich dem das elektrische Eingangssignal umsetzenden Wandler sein kann, wieder in ein elektrisches Signal umgesetzt wird. In Abhängigkeit von der Konfiguration der Reflektoren entsteht ein vorgegebener Code, welcher dieses ID-Tag repräsentiert. Das den Code repräsentierende elektrische Signal wird auf ein das Abfragesignal aussendendes System zurückgesendet, wodurch die Stelle identifizierbar ist, an der das ID-Tag angeordnet ist. Derartige Identifizierungssysteme sind in einer großen Vielzahl von Anwendungsfällen verwendbar.

Bedingt durch die hohe Dämpfung von ID-Tags und eine Empfindlichkeitsabnahme mit der vierten Potenz des Abstandes des ID-Tags vom abfragenden System muß die Abfrage mit hohen Leistungsamplituden erfolgen. Oft ist es erwünscht, ein ID-Tag vor der Abfrage seiner Codierung zunächst nur hinsichtlich seiner Anwesenheit zu identifizieren. Enthält es keine zusätzliche Information über seine Anwesenheit, so muß die Abfrage permanent durchgeführt werden, d. h. das abfragende System muß dauernd hochfrequente elektromagnetische Wellen abstrahlen. Wenn auch noch keine gesicherten Erkenntnisse darüber vorliegen, daß hochfrequente elektromagnetische Wechselfelder Belastungen darstellen können, so ist jedenfalls sicher, daß in Fällen, in denen ID-Tags zunächst lediglich hinsichtlich ihrer Anwesenheit identifiziert werden sollen, ein Permanentbetrieb des Abfragesystems im vorgenannten Sinne auch aus systemtechnischen Gründen ungünstig ist.

Der vorliegenden Erfindung liegt daher die Aufgabe zugrunde, ID-Tags der in Rede stehenden Art so auszugestalten, daß in Fällen, in denen zunächst lediglich ihre Anwesenheit festgestellt werden soll, ein Permanentbetrieb des abfragenden Systems vermieden werden kann.

Diese Aufgabe wird bei einer mit akustischen Oberflächenwellen arbeitenden Identifizierungsmarke der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

Die Erfindung wird nachfolgenden anhand eines Ausführungsbeispiels gemäß den Figuren der Zeichnung näher erläutert. Es zeigt:
- Figur 1: in schematischer, teilweise perspektivischer Darstellung den generellen Aufbau einer Identifizierungsmarke mit einem erfindungsgemäß ausgebildeten Reflektor;
- Figur 2: ein Diagramm eines Echosignals eines ID-Tags bei Abfrage mit einem kurzen Impuls in Form der zeitlichen Amplitudenabhängigkeit für ein bekanntes ID-Tag; und
- Figur 3: ein dem Diagramm nach Figur 2 entsprechendes Diagramm für ein erfindungsgemäß ausgebildetes ID-Tag.

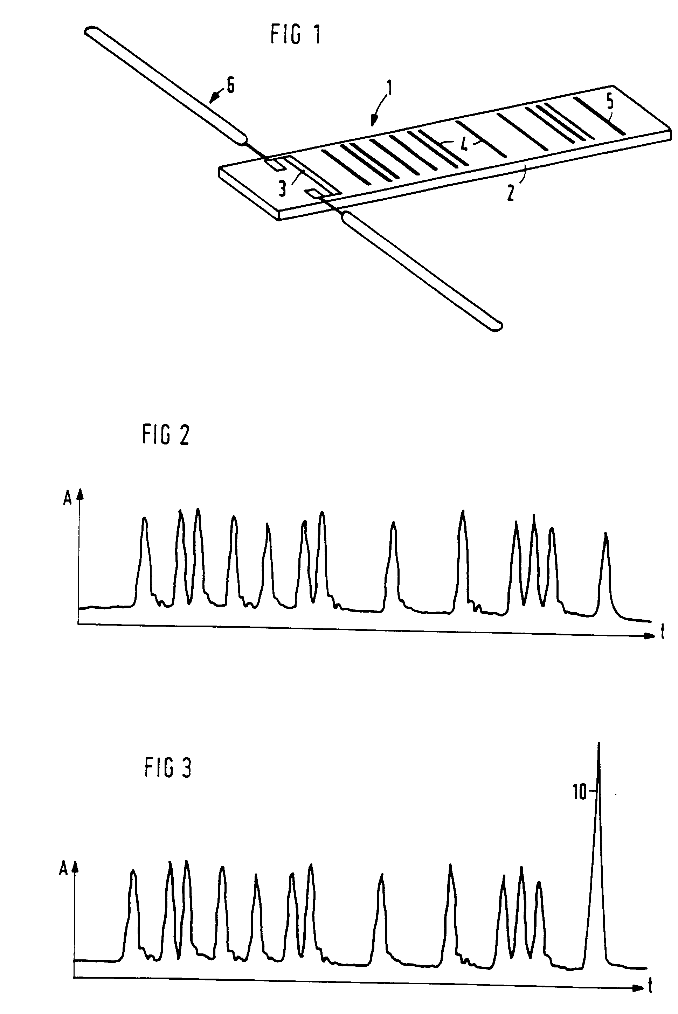

Gemäß Figur 1 wird ein ID-Tag 1 generell durch ein piezoelektrisches Substrat 2 gebildet, auf dem ein Eingangs-/Ausgangs-Interdigitalwandler 3 angeordnet ist, der ein in ihn eingespeistes elektrisches Signal in eine sich an der Oberfläche des Substrats 2 ausbreitende akustische Oberflächenwelle umsetzt und eine in ihn einlaufende akustische Oberflächenwelle in ein elektrisches Signal rückübersetzt. Ein elektrisches Signal wird in diesen bzw. von diesem Eingangs-/-Ausgangs-Interdigitalwandler 3 über eine Antenne 6 eingespeist bzw. ausgesendet. Diese Antenne 6 nimmt ein von einem nicht dargestellten Abfrage-/Auswertegerät drahtlos übertragenes Abfragesignal auf und strahlt ein elektrisches Signal vom Eingangs-/Ausgangs-Interdigitalwandler 3 in Form eines Echosignals ab.

Weiterhin sind auf dem piezoelektrischen Substrat 2 mehrere Reflektoren 4 vorgesehen, welche die vom Eingangs-/Ausgangs-Interdigitalwandler 3 abgegebene akustische Oberflächenwellen auf ihn rückreflektieren, wodurch ein für das ID-Tag 1 kennzeichnender Code entsteht. Dieser Code ist durch die Anzahl und die geometrische Anordnung der Reflektoren 4 auf dem Substrat 2 festgelegt. Er wird über die Antenne 6 abgestrahlt und auf das Abfrage-/Auswertegerät rückgesendet.

Ein Abfrage-/Auswertegerät sendet also ein elektrisches Signal in Form von periodischen, frequenz- oder amplitudenmodulierten HF-Impulsen aus. Die HF-Energie gelangt über die Antenne 6 auf den Interdigitalwandler 3, der eine akustische Oberflächenwelle auf dem Kristall 2 anregt, wobei ein kleiner Teil der Anregungswelle an den jeweiligen Reflektoren reflektiert wird. Dieser Anteil hat pro Reflektor eine Leistung von weniger als 1% der Anregungswellenleistung, um die Auswirkungen störender Mehrfachechos, die zwischen den einzelnen Reflektoren auftreten können, gering zu halten. Das Echosignal des ID-Tags besteht im Idealfall aus gleich großen HF-Impulsen, die vom Abfrage-/Auswertegerät empfangen und ausgewertet werden können. Dieser Sachverhalt ist im Diagramm nach Figur 2 dargestellt, in dem die Amplitude A eines impulsförmigen Echosignals eines an sich bekannten ID-Tag 1 bei Abfrage mit einem kurzen Impuls als Funktion der Zeit t dargestellt ist.

Erfindungsgemäß ist nun mindestens ein weiterer Reflektor 5 auf dem ID-Tag 1 nach Figur 1 vorgesehen, dessen Reflektivität groß gegen die Reflektivität der übrigen Reflektoren 4 in der Reflektorkette ist. Dieser Reflektor 5 ist vorzugsweise vom Interdigitalwandler 3 aus gesehen der letzte in der Reflektorkette. Er liegt also hinter der Folge von den Code des ID-Tags 1 definierenden Reflektoren 4. Die Reflektivität dieses stark reflektierenden Reflektors 5 kann beispielsweise durch entsprechende Wahl der Anzahl von im einzelnen nicht dargestellten Elektrodenfingern im Reflektor festgelegt werden.

Zur Identifikation des ID-Tags lediglich hinsichtlich seiner Anwesenheit kann daher eine Abfrage mit geringerer Leistung erfolgen, so daß das am Abfrage-/Auswertegerät ankommende Echosignal aufgrund der größeren Reflektivität des Reflektors 5 immer noch eine für die Auswertung ausreichende Amplitude besitzt. Mit anderen Worten ausgedrückt, beträgt die Amplitude des vom Reflektor 5 mit größerer Reflektivität kommenden Impulses ein Mehrfaches der Amplitude der Codierungs- bzw. Datenimpulse. Dieser Sachverhalt ist im Diagramm nach Figur 3 dargestellt, in dem der vom Reflektor 5 mit größerer Reflektivität erzeugte Impuls mit 10 bezeichnet ist. Im übrigen entspricht dieses Diagramm dem bereits erläuterten Diagramm nach Figur 2.

Mit einem erfindungsgemäß ausgebildeten ID-Tag sind besonders vorteilhafte Formen der Signalauswertung möglich. Generell kann bei einer ersten Abfrage zur Identifizierung eines ID-Tags die Zeit bis zur nächsten Abfrage so groß gewählt werden, daß durch den Reflektor 5 mit großer Reflektivität verursachte Störungen abgeklungen sind.

Befindet sich das ID-Tag auf einem sich bewegenden Objekt, so kann im Gebiet eines Abfrage-/Auswertegerätes zunächst eine Abfrage mit geringerer Leistung erfolgen, die jedoch noch ausreicht, das ID-Tag über den vom Reflektor mit hoher Reflektivität erzeugten Echoimpuls als im Abfragegebiet des Abfrage-/Auswertegerätes vorhanden zu identifizieren. Diese Sendeleistung braucht zur Abfrage der den Code des ID-Tags definierenden Reflektoren noch nicht auszureichen. Für ein im Abfragegebiet auftauchendes ID-Tag erscheint also der Impuls vom Reflektor mit großer Reflektivität in einem zugeordneten Zeitfenster des Abfrage-/Auswertegerätes. Ferner kann zur Abfrage des Reflektors hoher Reflektivität ein längerer geringer auflösender Abfrageimpuls verwendet werden, der eine geringere Bandbreite besitzt und damit eine Reduzierung der Empfängerbandbreite zuläßt. Daraus folgt ein niedrigerer Rauschpegel, was eine weitere Senkung der Sendeleistung bzw. eine höhere Reichweite bei gleichbleibender Sendeleistung ermöglicht. Zum Auslesen des Codes kann die Sendeleistung erhöht werden, bis das ID-Tag das Abfragegebiet verläßt. Es ergibt sich also eine vorteilhafte deutliche Reduzierung der Sendeleistung, welche im Permanentbetrieb aufgebracht werden muß, um ein ID-Tag, das möglicherweise in das Abfragegebiet gelangt, möglichst frühzeitig zu erkennen.

Weiterhin stellt der Reflektor mit großer Reflektivität eine feste Zeitmarke in Bezug auf das den Code definierende Echosignal dar. Mit Hilfe dieser Zeitmarke kann die Folge der Abfrageimpulse zeitlich statistisch gemittelt werden, um einen größeren Signal-/Störabstand gegenüber systemsynchronen Störungen zu gewinnen.

Darüber hinaus kann die vorgenannte Zeitmarke bei der Identifizierung von bewegten Objekten, wie z. B. fahrenden Fahrzeugen insbesondere auch dazu benutzt werden, eine Dopplerkompensation für eine phasenkohärente Integration der empfangenen Codeimpulse vorzunehmen, in dem diese phasenmäßig auf den Impuls vom Reflektor mit großer Reflektivität oder einen anderen starken Impuls bezogen werden. Beispielsweise können die Codeimpulse mit dem jeweils zugehörigen Impuls vom Reflektor mit großer Reflektivität als Phasenreferenz zwischengespeichert und nachträglich phasenrichtig überlagert werden. Dies ist dann erforderlich, wenn während des Auslesevorgangs eine Relativbewegung zwischen ID-Tag und Lesegerät stattfindet. Eine derartige Integration verbessert wirksam das Signal-/Rauschverhältnis der Empfangssignale, wobei der erreichte Gewinn in eine weitere Reduzierung der Sendeleistung oder eine Reichweitensteigerung der Abfrage bei gleicher Sendeleistung umgesetzt werden kann.

Signalauswertungen der vorstehend genannten Art sind an sich aus der Radartechnik bekannt.

Grundsätzlich ist es also möglich, mit erfindungsgemäß ausgebildeten ID-Tags bei Weg-, Positions- und Geschwindigkeitsmessungen aufgrund der größeren Reichweite längere Meßstrecken sowie eine höhere Auflösung und Meßgenauigkeit zu erzielen.

In Weiterbildung der Erfindung ist es möglich, hinsichtlich ihrer Bauart unterschiedliche Reflektoren für den Reflektor mit großer Reflektivität und die einen Code definierenden Reflektoren zu wählen. Beispielsweise kann der Reflektor mit hoher Reflektivität dispersiv ausgebildet sein, wie dies beispielsweise in der älteren deutschen Patentanmeldung P 43 36 897.2 beschrieben ist, während die den Code definierenden Reflektoren linearphasig reflektierende Elemente sein können.

## Patentansprüche

1. Mit akustischen Oberflächenwellen arbeitende Identifizierungsmarke - ID-Tag - für Identifizierungssysteme, in denen ein Abfrage-/Auswertegerät Identifizierungsmarken mittels eines drahtlos übertragenen Abfragesignals abfragt und ein von diesen rückgesendetes codiertes Antwortsignal auswertet, wobei die Codierung des Antwortsignals durch Anzahl und Lage von ID-Tag-Reflektoren (4) gegeben ist, **dadurch gekennzeichnet,** daß mindestens ein weiterer Reflektor (5) mit gegen die Reflektivität der die Codierung definierenden Reflektoren (4) großer Reflektivität vorgesehen ist.

2. Identifizierungsmarke nach Anspruch 1, **dadurch gekennzeichnet,** daß der Reflektor (5) mit großer Reflektivität von einem Interdigitalwandler (3) aus gesehen der letzte in einer Folge von Reflektoren (4, 5) ist.

3. Identifizierungsmarke nach Anspruch 1 und/oder 2, **dadurch gekennzeichnet,** daß der Reflektor (5) mit großer Reflektivität ein dispersiver Reflektor ist und das die den Code definierenden Reflektoren (4) linearphasig reflektierende Reflektoren sind.

## Claims

1. Identification mark - ID tag - operating using surface acoustic waves for identification systems, in which an interrogation/evaluation unit interrogates identification marks by means of an interrogation signal, which is transmitted without wires, and evaluates an encoded response signal sent back from said marks, the encoding of the response signal being produced by the number and position of ID tag reflectors (4), **characterized in that** at least one further reflector (5) is provided having greater reflectivity than the reflectivity of the reflectors (4) which define the encoding.

2. Identification mark according to Claim 1, **characterized in that** the reflector (5) having high reflectivity is the last, seen from an interdigital converter (3), in a sequence of reflectors (4, 5).

3. Identification mark according to Claim 1 and/or 2, **characterized in that** the reflector (5) having high reflectivity is a dispersive reflector, and in that those reflectors (4) which define the code are reflectors which reflect in linear phase.

## Revendications

1. Etiquette d'identification fonctionnant avec des ondes acoustiques de surface ("ID-tag") et conçue pour des systèmes d'identification dans lesquels un appareil d'interrogation / d'interprétation interroge des étiquettes d'identification grâce à un signal d'interrogation transmis sans fil, et interprète un signal de réponse codé renvoyé par ces étiquettes, et dans lequel le codage du signal de réponse est assuré par le nombre et la position de réflecteurs d'lD-tags (4), **caractérisée en ce qu**'on prévoit au moins un autre réflecteur (5) ayant par rapport à la réflectivité des réflecteurs (4) définissant le codage, une réflectivité élevée.

2. Etiquette d'identification selon la revendication 1, **caractérisée en ce que** le réflecteur (5) à réflectivité élevée est le dernier d'une série de réflecteurs (4, 5), vu d'un convertisseur internumérique (3).

3. Etiquette d'identification selon la revendication 1 et / ou 2, **caractérisée en ce que** le réflecteur (5) à réflectivité élevée est un réflecteur dispersif, et en ce que les réflecteurs définissant le code (4) sont des réflecteurs réfléchissants à phase linéaire.
